# EUROPEAN PATENT SPECIFICATION

(11) **EP 1 435 127 B1**
(45) Date of publication and mention of the grant of the patent: **18.11.2015**
(21) Application number: 02748822.0
(22) Date of filing: 21.06.2002
(51) Int. Cl.: H02H 1/04, H02H 3/00, H02H 3/33

(54) **RESIDUAL CURRENT OPERATED CIRCUIT BREAKER**
FEHLERSTROMSCHUTZSCHALTER
DISJONCTEUR A COURANT RESIDUEL

(30) Priority: 22.06.2001 IT MI20011327
(43) Date of publication of application: 07.07.2004
(73) Proprietor: ABB S.p.A., 20124 Milano (IT)
(72) Inventor: AMADORI, Claudio, I-20144 Milano (IT); COLOMBO, Franco, I-21046 Malnate (IT)
(74) Representative: Giavarini, Francesco
(86) International application number: PCT/EP2002/007046
(87) International publication number: WO 2003/001641

(56) References cited:
- GB-A- 2 318 002
- US-A- 3 728 580

## Description

The present invention relates to a residual current operated circuit breaker for protection against a ground leakage current exceeding a preset threshold value in a low-voltage electric circuit; more precisely, the definition of a residual current operated circuit breaker for a low-voltage electric circuit is to be understood as designating a circuit breaker for applications with operating voltages up to 1000 volts in the case of alternating current.

As is known, residual current operated circuit breakers are devices suitable to interrupt the flow of current in an electric circuit when a ground leakage current higher than a preset threshold value occurs.

One of the particular characteristics of these circuit breakers is that they trip rather rapidly; in this manner, they ensure adequate protection of the electrical system and of the loads supplied thereby against the small leakages that usually precede short-circuits, and most of all of users against so-called direct contacts, i.e., accidental contacts with a conductor that is normally live, specifically a phase of the circuit (for example a bare wire, a broken outlet, et cetera), and against indirect contacts, i.e., a contact with a conducting mass that is normally insulated (for example the casing of an electrical household appliance) which, due to a fault or an accidental event, makes contact with a phase of said circuit and therefore is at a dangerous voltage.

In the case of indirect contacts, if the mass is correctly grounded by means of the protection conductor, also referenced in the art as "PE" or "Protection Earth", the residual current operated circuit breaker, whose sensitivity is coordinated with the resistance of the grounding system, performs a contact-preventing action, interrupting the current before the voltage of the mass reaches dangerous values (higher than 50 V AC according to currently applicable statutory provisions).

In the case of direct contacts, instead, or even in the case of indirect contacts if an adequate grounding system is not present, the circuit breaker does not prevent contact but limits its consequences, interrupting the current in the shortest possible time.

Currently, known types of residual current operated circuit breaker, despite performing adequately the protective functions that they are meant to perform, have aspects that are not fully satisfactory.

In particular, one critical aspect of residual current operated circuit breakers currently in use is the fact that when the preset actuation threshold is exceeded, the flow of current in the circuit is interrupted regardless of the cause of the ground leakage current, whether due to direct contact, to a potential indirect contact, or to a generic ground leakage that cannot be correlated to any fault but can be correlated to the inherent nature of certain devices, such as electrical filters or data processing devices.

Accordingly, in order to ensure an adequate safety margin for users, especially against direct-type contacts, i.e., the most dangerous and damaging ones, for which there is no other kind of active protection, most practical applications use high-sensitivity residual current operated circuit breakers, i.e., circuit breakers that are set with very low actuation thresholds of no more than 30 milliamps, according to currently applicable statutory provisions. This entails that on the one hand a high level of protection is ensured, but on the other hand one might encounter untimely trippings of the circuit breaker, shutting down the system, even when there are no actual danger situations.

During the normal operation of the devices connected to the system, especially if they are old, owing to deterioration of their insulation there may be leakages of current toward the ground, by means of the protection conductor, that are even greater than the threshold of 30 milliamps but do not pose a danger because the potential of the masses still remains below 50 volts. Moreover, there are ground current leakages that cannot be ascribed to any deterioration of the insulation but to the inherent nature of said devices, which during their normal operation produce ground leakage currents across the PE. Currently, this possibility is further increased by the massive use, in various devices, of electronic components, for example electric filters, that are often the source of these ground leakage currents, which are not correlated to any fault.

On the other hand, it would be possible to use residual current operated circuit breakers with lower sensitivity, which are therefore set with a higher actuation threshold, for example 300 milliamps; in this case, one would avoid at least partially untimely trippings, but one would increase the possibility that in case of direct or indirect contact in the absence of a suitable grounding system a user might make contact with a part at a dangerous voltage and be electrocuted, although the levels of leakage current are very low.

GB2318002 discloses a residual current operated circuit breaker having the above problem.

The aim of the present invention is to provide a residual current operated circuit breaker for protecting a low-voltage electric circuit that allows to obviate the above cited drawbacks and particularly ensures the necessary level of protection, allowing at the same time to eliminate or at least minimize unwanted and untimely trippings, thus reducing the possibility of unnecessarily disabling the electrical circuit and the user devices that it supplies.

This aim and other objects that will become apparent hereinafter are achieved by a residual current operated circuit breaker for protection against a ground leakage current that is higher than a preset threshold value in a low-voltage electric circuit, said circuit being connected to a ground electrode and supplying at least one load connected to said ground electrode by means of a protection conductor, comprising:
-- active conductors, each suitable to be connected, in input to said circuit breaker, to a corresponding conductor of the power supply circuit and to be connected, in output from said circuit breaker, to said load;
-- an interruption unit, which has fixed and movable contact means that can be mutually separated in order to interrupt the flow of current in said active conductors, and a kinematic mechanism suitable to move said moving contact means;
-- a release unit, which is suitable to interact functionally with said kinematic mechanism so as to determine the separation of the contact means upon receiving an actuation signal that indicates the presence of a ground leakage current that exceeds the threshold value; characterized in that it comprises:
-- a supplemental conductor, suitable to be functionally connected, in input to said circuit breaker, to the ground electrode and, in output from the circuit breaker, to the load protection conductor;
-- sensing means, which are functionally associated with said supplemental conductor and said active conductors and are suitable to detect the presence of a ground leakage current in said active conductors and/or in said supplemental conductor and to provide an actuation signal that causes the tripping of the release unit and the separation of the contacts when the value of the leakage current in the active conductors, reduced by a predefined quantity that is proportional to the leakage current flowing if any in said supplemental conductor, exceeds said threshold value.

In this manner, the circuit breaker according to the invention has a different sensitivity depending on whether the ground leakage current affects only the active conductors of the circuit, and therefore tripping is for protection against possible direct-type contacts, or also the protection conductor, and therefore tripping is for protection against possible contacts of the indirect type; accordingly, since the sensitivity of the circuit breaker to direct contacts is higher than to indirect contacts, the possibility of unnecessary trippings is minimized considerably, without altering the level of protection when the leakage current produces an actual danger condition. Furthermore, a considerable advantage of the invention is the fact that since it is possible to adjust the quantity to be subtracted from the value of the current that flows in the active conductors in the presence of a current that affects the supplemental conductor, one may even obtain a circuit breaker that is entirely desensitized to indirect-type contacts.

Further characteristics and advantages of the invention will become apparent from the description of preferred but not exclusive embodiments of the residual current operated circuit breaker according to the invention, illustrated only by way of non-limitative example in the accompanying drawings, wherein:
Figure 1 is a block diagram of the circuit breaker according to the invention;
Figure 2 is a view of a first embodiment of the sensing means used in the circuit breaker according to the invention;
Figure 3 is a view of a second embodiment of the sensing means used in the circuit breaker according to the invention;
Figure 4 is a view of a third embodiment of the sensing means used in the circuit breaker according to the invention;
Figure 5 is a view of a fourth embodiment of the sensing means used in the circuit breaker according to the invention.

In the description that follows, identical reference numerals designate, in the various figures, identical or technically equivalent elements.

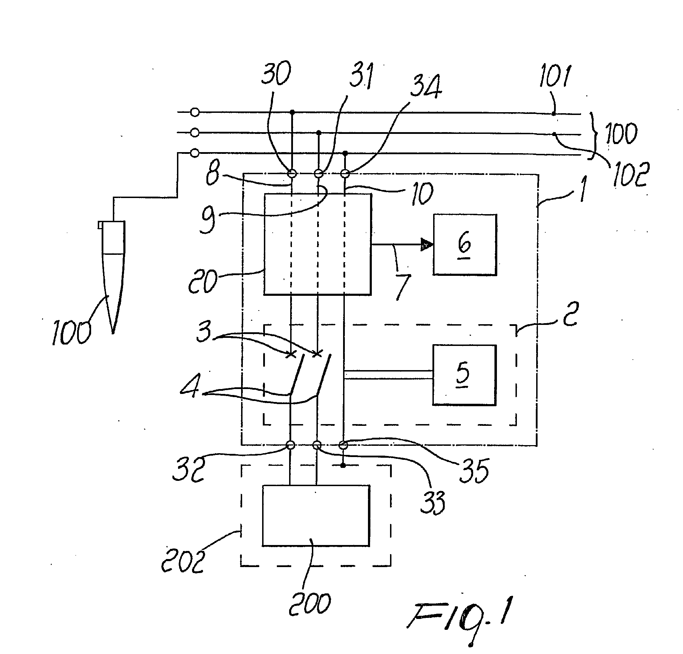

Figure 1 schematically illustrates the residual current operated circuit breaker 1 according to the invention, inserted in a low-voltage electric circuit 100, which is connected to the ground electrode of the existing grounding system 110 of said circuit and supplies one or more loads 200, for example electric motors, lamps, electric household appliances, et cetera; in turn, the loads are electrically connected to the ground electrode 110 of the system in which they are used by means of the protection conductor 201 (or PE, "Protection Earth"), which is connected to the metallic masses of the load, for example to the casing 202.

As shown schematically in said figure, the residual current operated circuit breaker 1 comprises, according to embodiments that are widely known in the art and are therefore not described in detail, active conductors, each of which is connected, by virtue of connection terminals, in input and in output with respect to said circuit breaker respectively, to a corresponding conductor of the power supply line of the circuit and to the loads 200 supplied by the circuit; in particular, Figure 1 illustrates a single-phase electric circuit 100, with a phase conductor 101 and a neutral conductor 102 which are connected in input to the circuit breaker, by virtue of terminals 30 and 31 provided thereon, respectively to a first active conductor 8 and to a second active conductor 9 of the circuit breaker; said conductors 8 and 9 are furthermore connected in output from the circuit breaker, by means of respective terminals 32 and 33, to a load 200. Furthermore, the circuit breaker comprises an interruption unit 2, which has fixed and movable contact means 3 and 4 that can be mutually separated in order to interrupt the flow of current in the active conductors and a kinematic mechanism 5 suitable to move the moving contact means 4; a release unit 6 is associated with the interruption unit 2 and comprises for example a magnetic release polarized relay or an electronic release, which is suitable to interact functionally with the kinematic mechanism 5 so as to determine the separation of the moving contact means 4 from the fixed ones 3 when an actuation signal 7 is received which indicates the presence of a ground leakage current exceeding a preset threshold.

Advantageously, the residual current operated circuit breaker 1 according to the invention comprises a supplemental conductor 10, which is connected electrically, in input to the circuit breaker and in output therefrom, by means of an additional pair of terminals 34 and 35 suitably provided thereon, respectively, to the ground electrode 110 of the circuit and to the protection conductor 201 of the load 200; furthermore, sensing means 20 are associated with the supplemental conductor 10 and with the active conductors 8 and 9 and are suitable to provide the release unit 6 with the signal that indicates the level of any circulating ground leakage current, according to embodiments and for purposes described in detail hereinafter.

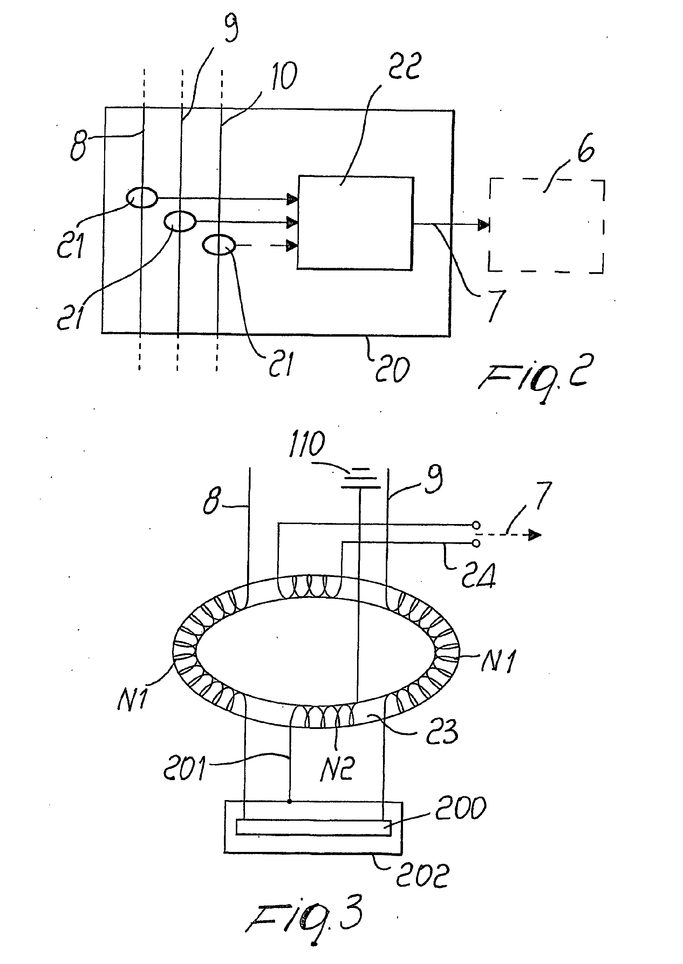

In particular, according to a first embodiment shown in Figure 2, the sensing means 20 preferably comprise current sensors 21, for example Hall-effect sensors, each of which is associated with a corresponding primary conductor 8 and 9 and with the supplemental conductor 10, and a computing unit 22, preferably a programmable electronic unit, which receives in input the signals of said sensors 21 that represent the current that circulates in the conductors, calculates the vector sum of the currents in the active conductors, and compares the value of said vector sum with the current that circulates in the supplemental conductor.

In particular, in normal operating conditions, the value of the vector sum of the currents that flow in the conductors 8 and 9 and the current that flows in the conductor 10 is zero; in this case, the computing unit 22 receives mutually balanced signals from the sensors 21 and the processing that is performed does not provide an actuation signal in output to the release unit 6. In the presence of a leakage current in the conductors of the circuit, if the current in the supplemental conductor 10 remains zero and therefore there is a condition of potential direct contact, the currents that circulate in the active conductors 8 and 9 are mutually unbalanced and accordingly so are the signals supplied by the sensors 21 to the computing unit 22; therefore, the computing unit 22 performs the vector sum of the received signals, providing the release unit 6 with an actuation signal 7 that indicates the level of leakage current that is present. When this level exceeds the preset threshold value, the actuation signal is such as to trip the unit 6, which in turn causes the separation of the contacts and ultimately interrupts the flow of current in the system toward the loads 200. In these conditions, the supplemental conductor 10 is not affected by any leakage current.

If instead there is a leakage current that also affects the protection conductor 201 of the load 200, and therefore there is a potential condition of indirect contact, the computing unit 22 receives in input the signal of the sensor 21 associated with the supplemental conductor 10 and the signals of the sensors 21 associated with the conductors 8 and 9, whose value is affected by the presence of the leakage current. In this situation, the computing unit 22 subtracts from the value resulting from the sum of the signals that arrive from the active conductors 8 and 9 the value of the signal that arrives from the conductor 10; in this manner, the actuation signal 7 provided to the release unit 6 is such as to exceed the preset threshold limit and cause the opening of the circuit only when the leakage current that is actually present on the load is equal to the preset threshold value plus a preset additional quantity.

This allows to vary appropriately the sensitivity of the circuit breaker, and particularly to reduce it for indirect contacts with respect to direct ones, by a chosen amount that essentially allows to define a second threshold, which is higher than the threshold that is preset for direct contacts. This adjustment can be performed at the factory or by the installer by virtue of an appropriate control located on the outer casing of the circuit breaker. In particular, by programming appropriately the computing unit 22 it is possible to vary the sensitivity of the circuit breaker between a first operating condition, in which it is identical for direct and indirect contacts, as in a conventional residual current operated circuit breaker, and a second operating condition, in which the circuit breaker is totally insensitive to indirect contacts. In this case, it would then be the installer's responsibility to adopt the necessary system precautions for protection against indirect contacts.

In this manner, with a single circuit breaker it is possible to cover a very wide range of applications, and to do so according to a constructive solution that is extremely simple; in order to achieve the above described results it is in fact sufficient to set appropriate multiplication coefficients for the signals that arrive from the sensors.

A second embodiment of the sensing means 20 is shown schematically in Figure 3; in this case, said means 20 comprise a toroidal magnetic core 23, on which the active conductors 8 and 9 and the supplemental conductor 10 are wound appropriately, acting in this case as primary conductors. In particular, the conductors 8 and 9 are wound in the same direction and with an identical number of winding turns N1, while the supplemental conductor 10 is wound on the core 23 with a number of turns N2 that is smaller than N1 and with the same winding direction; moreover, on the core 23 there is a secondary winding 24. In this case, in normal operating conditions the currents that circulate in the active conductors are mutually balanced and the resulting signal across the secondary winding 24 is nil.

When a leakage current occurs in the conductors of the circuit and the current in the supplemental conductor 10 remains zero, an imbalance is created in the currents that circulate in the conductors 8 and 9, and a magnetic flux that is proportional to the leakage current and to the number of turns N1 is generated on the core 23; accordingly, an electrical voltage is induced across the secondary winding 24, and the representative signal 7 of said voltage, which indicates the level of residual current that is present, is provided to the release unit 6. When said value is higher than the preset limit, the release unit 6 causes the tripping of the kinematic mechanism 5, with the consequent separation of the contacts and the interruption of the flow of current in the system toward the loads 200. In this situation, the supplemental conductor is not affected by any leakage current.

If there is a ground leakage current through the protection conductor 201 of the load 200, both the supplemental conductor 10 and the primary conductors 8 and 9 are affected by said leakage current, and two fluxes are generated in total on the core 23, said fluxes having mutually opposite signs owing to the opposite direction of the currents; moreover, in the specific case the flux generated by the active conductors 8 and 9 is greater than the flux generated by the supplemental conductor 10 by virtue of the larger number of turns N1 with respect to N2, and ultimately the electrical voltage induced across the secondary winding 24 is proportional to the difference between the two fluxes. Accordingly, as in the previously described embodiment, the value of the actuation signal 7 provided by the secondary conductor 24 to the release unit 6 is such as to exceed the preset threshold limit and cause the opening of the circuit only when the vector sum of the leakage current in the active conductors is higher than the threshold limit by a chosen additional amount; said additional amount is proportional to the current that flows in the protection conductor 201. In this case, said additional amount can be, for example, adjusted beforehand by acting on the ratio between the number of winding turns N1/N2 and therefore adjusting the quantity to be subtracted from the current that circulates in the active conductors. In particular, by winding the active conductors and the supplemental conductor on the toroidal core with an identical number of winding turns, preferably a single turn, and in phase with each other, so that by virtue of the direction of the currents the magnetic flux generated by the supplemental conductor connected to the grounding system counterbalances and totally eliminates the magnetic flux generated by the active conductors in the case of indirect contacts, one obtains complete desensitization of the circuit breaker to indirect-type contacts; in this case it is as if, in the presence of a leakage current in the protection conductor, an additional quantity that is substantially equal to infinity were added to the preset threshold limit.

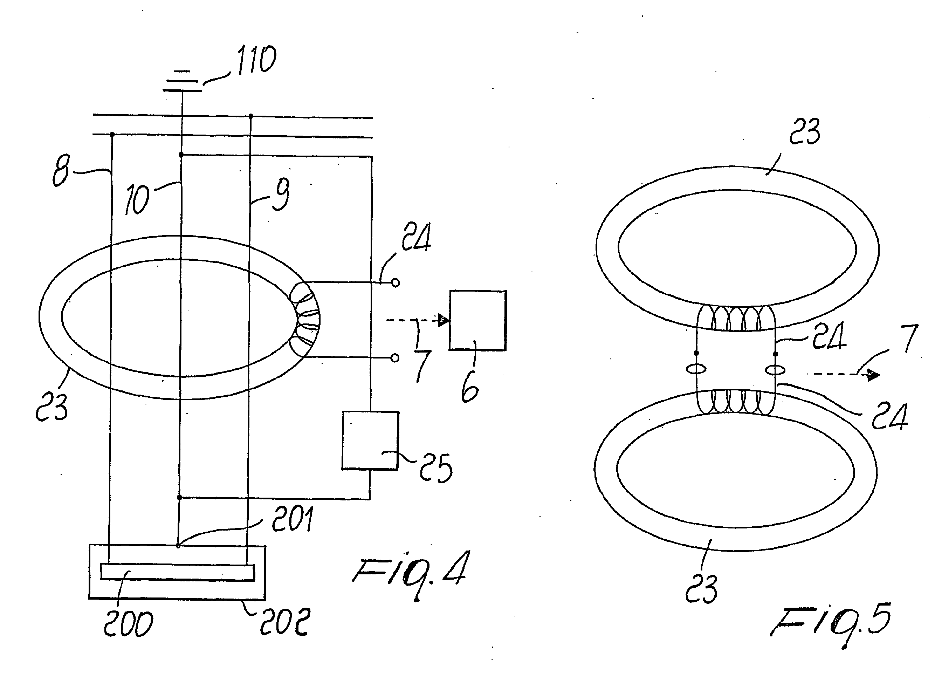

A third embodiment of the sensing means 20 is shown in Figure 4. In this case, according to an embodiment that is advantageous from the point of view of dimensions and easy manufacture, the sensing means 20 comprise, as in the case shown in Figure 3, a toroidal core 23, but in this embodiment the windings of the conductors 8 and 9 and of the supplemental conductor 10 have an identical number of turns, preferably just one. In this case, the current that circulates in the supplemental conductor 10 is at least partially shunted out of the core by means of current divider means 25, typically a variable resistor located outside the core 23, whose adjustment allows to subtract at least part of any leakage current circulating in the supplemental conductor and therefore vary the sensitivity that the circuit breaker must have with respect to a ground leakage current in the protective conductor 201 of the load 200 and therefore with respect to an indirect contact.

In this case also, by appropriately adjusting the variable resistor it is possible to render the circuit breaker totally insensitive to indirect contacts; adjustment of the variable resistor can be performed in the factory, during the manufacture of the circuit breaker, or left to the installer, who can thus decide the extent to which the circuit breaker is less sensitive to indirect contacts than to direct contacts.

The solutions described above for a bipolar-type circuit 100 can be implemented in a fully similar manner for a multipole circuit, for example a three-phase one, and with any number of loads 200 supplied thereby.

In such cases, one embodiment of the sensing means 20 that is particularly preferable for a three-phase circuit is shown schematically in Figure 5. As shown in the figure, the means 20 comprise two toroidal cores 23: a first core 23, on which the active conductors, not shown for the sake of descriptive simplicity, are wound with an identical number of turns N1, said conductors being equal in number to the active conductors of the circuit 200, a secondary winding 24 being also wound on said first core; and a second toroidal core 23, on which the supplemental conductor, also not shown, and an additional secondary winding 24 are wound with a number of turns N2 that is preferably equal to N1 or optionally smaller. Furthermore, the two secondary windings 24 are mutually coupled in output from the respective cores 23. In this manner, if there is a leakage current that affects the active conductors of the circuit, the active conductors of the circuit breaker are affected by currents that induce, across the first secondary winding 24, a signal 7 that is representative of the value of the residual current that is present; if said current exceeds the preset threshold, the actuation signal 7 is provided to the release unit 6, which causes contact separation. In this situation, as in the preceding cases, the supplemental conductor 10 is not affected by any leakage current.

If there is a leakage current in the protection conductor 201 of a load 200, both the supplemental conductor and the active conductors are affected by said current and generate, on their respective cores 23, a magnetic flux that induces an electrical voltage on the corresponding secondary windings 24. By virtue of the coupling between the two secondary windings 24, the signal 7 supplied to the release unit 4 is ultimately determined by the contribution due to the active conductors, minus the one due to the supplemental conductor; accordingly, in this case also the interruption of the flow of current in the presence of a leakage current in the protection conductor 201 of the load 200 occurs when it exceeds the preset threshold value by a certain additional amount. This amount can be adjusted, in this case also, by acting on the number of turns of the windings of the active primary and/or supplemental conductors and of the secondary windings, or by choosing for the two cores magnetic materials characterized by different performance or also by using two cores of mutually different dimensions, as well as by acting on the combination of the aforementioned factors.

In this manner, one has a solution that allows to reduce dimensions considerably, taking into account the current levels that the conductors have to carry and therefore their cross-sections and the necessary windings.

In practice it has been found that the circuit breaker according to the invention fully achieves the intended aim, providing significant advantages with respect to the known art; with respect to conventional circuit breakers, the circuit breaker according to the present invention in fact has an additional pair of terminals for upstream and downstream connection, respectively, to the central earth collector and therefore to the ground electrode and to the protection conductor (PE) of the load, and has appropriate sensing means that allow to measure any current flowing in said protection conductor and to adjust tripping sensitivity. In this manner, it is capable of providing adequate protection against both direct and indirect contacts by having a different sensitivity with respect to the two types of event and therefore allowing, by virtue of an actuation sensitivity for indirect contacts that is lower than for direct contacts and is adjustable with respect thereto, to eliminate or reduce considerably the possibilities of untimely and unnecessary trippings for this type of fault and when supplying power to loads, typically electrical filters, which even in the absence of faults cause earth leakage of current by means of the protection conductor. Furthermore, indeed because it is possible to adjust the sensitivity to the various kinds of event, the circuit breaker according to the invention is characterized by extreme flexibility in application; as described above, by adjusting the amount to be subtracted from the value of the current that flows in the active conductors in the presence of a current on the supplemental conductor it is in fact even possible to render the circuit breaker sensitive only to direct contacts, i.e., totally insensitive to earth leakages affecting the supplemental conductor and therefore the protection conductor. In such cases, it is the installer's responsibility to make other arrangements for protection against indirect contacts, for example by using, in addition to the residual current operated circuit breaker according to the invention, a conventional residual current operated circuit breaker having a low sensitivity, for example a threshold of 500 milliamps.

The residual current operated circuit breaker thus conceived is susceptible of numerous modifications and variations, all of which are within the scope of the inventive concept; all the details may furthermore be replaced with other technically equivalent elements.

In practice, the materials used, as well as the dimensions and the contingent shapes, may be any according to the requirements and the state of the art.

## Claims

1. A residual current operated circuit breaker (1) for protection against a ground leakage current that is higher than a preset threshold value in a low-voltage electric circuit, said circuit being connected to a ground electrode and supplying at least one load (200) connected to said ground electrode by means of a protection conductor, comprising:
-- active conductors (8,9), each suitable to be connected, in input to said circuit breaker, to a corresponding conductor of the power supply circuit and to be connected, in output from said circuit breaker, to said load;
-- an interruption unit (2), which has fixed and movable contact means (3, 4) that can be mutually separated in order to interrupt the flow of current in said active conductors, and a kinematic mechanisms (5) suitable to move said moving contact means;
-- a release unit (6), which is suitable to interact functionally with said kinematic mechanism (5) so as to determine the separation of the contact means upon receiving an actuation signal (7) that indicates the presence of a ground leakage current that exceeds the threshold value;
**characterized in that** it comprises:
-- a supplemental conductor (10), suitable to be functionally connected, in input to said circuit breaker, to the ground electrode (110) and, in output from the circuit breaker, to a load protection conductor of the load;
-- sensing means, which are functionally associated with said supplemental conductor and said active conductors and are suitable to detect the presence of a ground leakage current in said active conductors and/or in said supplemental conductor and to provide the actuation signal that causes the tripping of the release unit and the separation of the contacts when the value of the leakage current in the active conductors, reduced by a predefined quantity that is proportional to the leakage current flowing if any in said supplemental conductor, exceeds said threshold value.

2. The residual current operated circuit breaker according to claim 1, **characterized in that** said sensing means comprise current sensors, each associated with one of the active conductors and with the supplemental conductor, and a computing unit, which receives in input the signals of said sensors and calculates and provides to the release unit a signal that is representative of the vector sum of the currents that circulate in said active conductors or is the result of the difference between said vector sum and the signal that arrives from the current sensor associated with the supplemental conductor.

3. The residual current operated circuit breaker according to claim 2, **characterized in that** said computing unit is a programmable electronic unit.

4. The residual current operated circuit breaker according to claim 1, **characterized in that** said sensing means comprise a toroidal core on which said active conductors are wound with an identical number of winding turns N1 and an identical winding direction, and on which said supplemental conductor is wound with a number of turns N2, a secondary conductor being furthermore wound on said toroidal core, said actuation signal being generated across said secondary conductor.

5. The residual current operated circuit breaker according to claim 4, **characterized in that** said supplemental conductor is wound on the core with a number of winding turns N2 that is smaller than N1.

6. The residual current operated circuit breaker according to claim 4, **characterized in that** said supplemental conductor is wound on the core with a number of winding turns N2 that is equal to N1.

7. The residual current operated circuit breaker according to claim 1, **characterized in that** said sensing means comprise:
-- a first toroidal core, on which said active conductors are wound with an identical number of winding turns N1 and with the same winding direction, and on which a first secondary winding is also wound;
-- a second toroidal core, on which said supplemental conductor is wound with a number of turns N2 and a second secondary winding is wound; said first and second secondary windings being mutually functionally coupled so as to generate said control signal.

8. The residual current operated circuit breaker according to claim 7, **characterized in that** said first and second toroidal cores are mutually different.

9. The residual current operated circuit breaker according to claim 1, **characterized in that** said sensing means comprise a toroidal core, on which said active and supplemental conductors are wound with an identical number of winding turns, and current divider means, which are electrically connected to said supplemental conductor so that at least part of the current that circulates in said supplemental conductor flows outside the toroidal core.

## Patentansprüche

1. Fehlerstromschutzschalter (1) zum Schutz gegen einen Erdleckstrom, der höher als ein voreingestellter Schwellwert ist, in einem elektrischen Niederspannungs-Schaltkreis, wobei der Schaltkreis mit einer Masseelektrode verbunden ist und zumindest eine Last (200) versorgt, die mit der Masseelektrode mittels eines Schutzleiters verbunden ist, aufweisend:
- aktive Leiter (8, 9), die jeweils geeignet sind, um, bei Eingang in den Leistungsschutzschalter, mit einem entsprechenden Leiter des Leistungszuführschaltkreises verbunden zu werden, und um, bei Ausgang aus dem Leistungsschutzschalter, mit der Last verbunden zu werden;
- eine Unterbrechungseinheit (2), die feste und bewegliche Kontaktmittel (3, 4) aufweist, die voneinander getrennt werden können, so dass der Fluss des Stroms in den aktiven Leitern unterbrochen werden kann, und einen kinematischen Mechanismus (5), der geeignet ist, die beweglichen Kontaktmittel zu bewegen;
- ein Freigabemittel (6), das geeignet ist, funktional mit dem kinematischen Mechanismus (5) zu interagieren, so dass die Trennung der Kontaktmittel nach Empfang eines Betätigungssignals (7), das das Vorhandensein eines Erdleckstroms anzeigt, der den Schwellwert überschreitet, bestimmt werden kann;
**dadurch gekennzeichnet, dass** er aufweist:
- einen Zusatzleiter (10), der geeignet ist, bei Eingang in den Leistungsschutzschalter, mit der Masseelektrode (110) funktional verbunden zu werden, und, bei Ausgang aus dem Leistungsschutzschalter, mit einem Lastschutzschalter der Last funktional verbunden zu werden;
- Erfassungsmittel, die dem Zusatzleiter und den aktiven Leitern funktional zugeordnet sind und geeignet sind, das Vorhandensein eines Erdleckstroms in den aktiven Leitern und/oder in dem Zusatzleiter zu erfassen und das Betätigungssignal bereitzustellen, das das Auslösen der Freigabeeinheit und die Trennung der Kontakte bewirkt, wenn der Wert des Ableitstroms in den aktiven Leitern, der um eine vordefinierte Menge reduziert ist, die proportional zu dem Ableitstrom ist, der, wenn überhaupt, in dem Zusatzleiter fließt, den Schwellwert überschreitet.

2. Fehlerstromschutzschalter nach Anspruch 1, **dadurch gekennzeichnet, dass** die Erfassungsmittel Stromsensoren, die jeweils einem von den aktiven Leitern und dem Zusatzleiter zugeordnet sind, und eine Berechnungseinheit aufweisen, die, bei Eingang, die Signale der Sensoren empfängt, und ein Signal, das die Vektorsumme der Ströme darstellt, die in den aktiven Leitern zirkulieren, oder das Ergebnis der Differenz zwischen der Vektorsumme und dem Signal ist, das von dem Stromsensor ankommt, der dem Zusatzleiter zugeordnet ist, berechnet und an der Freigabeeinheit bereitstellt.

3. Fehlerstromschutzschalter nach Anspruch 2, **dadurch gekennzeichnet, dass** die Berechnungseinheit eine programmierbare elektronische Einheit ist.

4. Fehlerstromschutzschalter nach Anspruch 1, **dadurch gekennzeichnet, dass** die Erfassungsmittel einen Ringkern aufweisen, auf den die aktiven Leiter mit einer identischen Anzahl von Wicklungswindungen N1 und einer identischen Wicklungsrichtung gewickelt sind, und auf den der Zusatzleiter mit einer Anzahl von Windungen N2 gewickelt ist, wobei zudem ein Sekundärleiter auf den Ringkern gewickelt ist, wobei das Betätigungssignal an dem Sekundärleiter erzeugt wird.

5. Fehlerstromschutzschalter nach Anspruch 4, **dadurch gekennzeichnet, dass** der Zusatzleiter mit einer Anzahl von Wicklungswindungen N2, die kleiner als N1 ist, auf den Kern gewickelt ist.

6. Fehlerstromschutzschalter nach Anspruch 4, **dadurch gekennzeichnet, dass** der Zusatzleiter mit einer Anzahl von Wicklungswindungen N2, die gleich N1 ist, auf den Kern gewickelt ist.

7. Fehlerstromschutzschalter nach Anspruch 1, **dadurch gekennzeichnet, dass** die Erfassungsmittel aufweisen:
- einen ersten Ringkern, auf den die aktiven Leiter mit einer identischen Anzahl von Wicklungswindungen N1 und mit der identischen Wicklungsrichtung gewickelt sind, und auf den zudem eine erste Sekundärwicklung gewickelt ist;
- einen zweiten Ringkern, auf den der Zusatzleiter mit einer Anzahl von Windungen N2 und eine zweite Sekundärwicklung gewickelt ist; wobei die erste und die zweite Sekundärwicklung gemeinsam funktional so gekoppelt sind, dass sie das Steuersignal erzeugen.

8. Fehlerstromschutzschalter nach Anspruch 7, **dadurch gekennzeichnet, dass** der erste und der zweite Ringkern sich voneinander unterscheiden.

9. Fehlerstromschutzschalter nach Anspruch 1, **dadurch gekennzeichnet, dass** die Erfassungsmittel einen Ringkern aufweisen, auf den die aktiven Leiter und der Zusatzleiter mit einer identischen Anzahl von Wicklungswindungen gewickelt sind, und Stromteilermittel aufweisen, die mit dem Zusatzleiter elektrisch verbunden sind, so dass zumindest ein Teil des Stroms, der in dem Zusatzleiter zirkuliert, außerhalb des Ringkerns fließt.

## Revendications

1. Disjoncteur actionné par un courant résiduel (1) pour une protection contre un courant de fuite à la masse qui est supérieur à une valeur de seuil prédéterminée dans un circuit électrique basse tension, ledit circuit étant connecté à une électrode de masse et fournissant au moins une charge (200) connectée à ladite électrode de masse au moyen d'un conducteur de protection, comprenant :
- des conducteurs actifs (8, 9), appropriés pour être connectés chacun, à l'entrée dudit disjoncteur, à un conducteur correspondant du circuit d'alimentation et pour être connectés, à la sortie dudit disjoncteur, à ladite charge ;
- une unité d'interruption (2), qui comporte des moyens formant contacts fixes et mobiles (3, 4) qui peuvent être mutuellement séparés afin d'interrompre la circulation de courant dans lesdits conducteurs actifs, et un mécanisme cinématique (5) approprié pour déplacer lesdits moyens formant contacts mobiles ;
- une unité de libération (6) qui est appropriée pour interagir fonctionnellement avec ledit mécanisme cinématique (5) de manière à déterminer la séparation des moyens formant contacts lors de la réception d'un signal d'actionnement (7) qui indique la présence d'un courant de fuite à la masse qui dépasse la valeur de seuil ;
**caractérisé en ce qu'**il comprend :
- un conducteur supplémentaire (10), approprié pour être connecté fonctionnellement, à l'entrée dudit disjoncteur, à l'électrode de masse (110) de la charge et, à la sortie du disjoncteur, à un conducteur de protection de charge de la charge ;
- des moyens de détection, qui sont associés fonctionnellement au dit conducteur supplémentaire et aux dits conducteurs actifs et qui sont appropriés pour détecter la présence d'un courant de fuite à la masse dans lesdits conducteurs actifs et/ou dans ledit conducteur supplémentaire et pour fournir le signal d'actionnement qui provoque le déclenchement de l'unité de libération et la séparation des contacts lorsque la valeur du courant de fuite dans les conducteurs actifs, réduite d'une quantité prédéfinie qui est proportionnelle au courant de fuite circulant le cas échéant dans ledit conducteur supplémentaire, dépasse ladite valeur de seuil.

2. Disjoncteur actionné par un courant résiduel selon la revendication 1, **caractérisé en ce que** lesdits moyens de détection comprennent des capteurs de courant, associés chacun à l'un des conducteurs actifs et au conducteur supplémentaire, et une unité de calcul, qui reçoit en entrée les signaux desdits capteurs et calcule et fournit à l'unité de libération un signal qui est représentatif de la somme vectorielle des courants qui circulent dans lesdits conducteurs actifs ou qui est le résultat de la différence entre ladite somme vectorielle et le signal qui arrive du capteur de courant associé au conducteur supplémentaire.

3. Disjoncteur actionné par un courant résiduel selon la revendication 2, **caractérisé en ce que** ladite unité de calcul est une unité électronique programmable.

4. Disjoncteur actionné par un courant résiduel selon la revendication 1, **caractérisé en ce que** lesdits moyens de détection comprennent un noyau toroïdal sur lequel lesdits conducteurs actifs sont enroulés avec un nombre identique de tours d'enroulement N1 et une direction d'enroulement identique, et sur lequel ledit conducteur supplémentaire est enroulé avec un nombre de tours N2, un conducteur secondaire étant en outre enroulé sur ledit noyau toroïdal, ledit signal d'actionnement étant généré à travers ledit conducteur secondaire.

5. Disjoncteur actionné par un courant résiduel selon la revendication 4, **caractérisé en ce que** ledit conducteur supplémentaire est enroulé sur le noyau avec un nombre de tours d'enroulement N2 qui est inférieur à N1.

6. Disjoncteur actionné par un courant résiduel selon la revendication 4, **caractérisé en ce que** ledit conducteur supplémentaire est enroulé sur le noyau avec un nombre de tours d'enroulement N2 qui est égal à N1.

7. Disjoncteur actionné par un courant résiduel selon la revendication 1, **caractérisé en ce que** lesdits moyens de détection comprennent :
- un premier noyau toroïdal, sur lequel lesdits conducteurs actifs sont enroulés avec un nombre identique de tours d'enroulement N et avec la même direction d'enroulement, et sur lequel un premier enroulement secondaire est également enroulé ;
- un deuxième noyau toroïdal, sur lequel ledit conducteur supplémentaire est enroulé avec un nombre de tours N2 et un deuxième enroulement secondaire est enroulé ; lesdits premier et deuxième enroulements secondaires étant couplés mutuellement fonctionnellement de manière à générer ledit signal de commande.

8. Disjoncteur actionné par un courant résiduel selon la revendication 7, **caractérisé en ce que** lesdits premier et deuxième noyaux toroïdaux sont mutuellement différents.

9. Disjoncteur actionné par un courant résiduel selon la revendication 1, **caractérisé en ce que** lesdits moyens de détection comprennent un noyau toroïdal, sur lequel lesdits conducteurs actifs et supplémentaire sont enroulés avec un nombre identique de tours d'enroulement, et des moyens de division de courant, qui sont connectés électriquement au dit conducteur supplémentaire de sorte qu'au moins une partie du courant qui circule dans ledit conducteur supplémentaire circule à l'extérieur du noyau toroïdal.
